# EUROPEAN PATENT SPECIFICATION

(11) **EP 0 444 185 B1**
(45) Date of publication and mention of the grant of the patent: **25.05.1994**
(21) Application number: 90914408.1
(22) Date of filing: 17.09.1990
(51) Int. Cl.: F16B 21/04, F16B 5/10

(54) **QUICK-RELEASE FASTENER**
SCHNELLÖSBARE BEFESTIGUNGSVORRICHTUNG
FIXATION A DECLENCHEMENT INSTANTANE

(30) Priority: 20.09.1989 GB 8921223
(43) Date of publication of application: 04.09.1991
(73) Proprietor: DZUS FASTENER EUROPE LIMITED, Farnham, Surrey GU9 9PL (GB)
(72) Inventor: WRIGHT, Andrew, Charles, Walden, Farnham Surrey GU9 8PU (GB)
(74) Representative: Brunner, Michael John
(86) International application number: GB9001430
(87) International publication number: WO9104424

(56) References cited:
- FR-A- 2 215 106
- GB-A- 1 216 011
- GB-A- 1 334 336
- US-A- 2 599 207

## Description

The present invention relates to a quick-release fastener for attaching a panel or similar member to a support, the fastener being inserted through corresponding apertures in the panel and support and rotatable to selectively secure and release them.

A fastener of this particular type is shown in GB-A-1334336. The fastener comprises a housing for attachment to the panel and the housing retains a stud having a cross-pin at its end remote from its head and is inserted through an aperture in each of the panel and support. The apertures are generally circular, but have diametrically opposed slots extending outwardly from the aperture, through which the ends of the cross-pin can pass in use, rotation of the cross-pin after passing through the slots on the support securing the panel to the support.

However, a fastener of this type requires two fitting stages, one in which the housing is attached to the panel, and a second when the panel is presented to the support, in which the cross-pin passes through the aperture in the support and is rotated to lie behind the rear surface of the support. The requirement for the housing to be attached to the panel reduces the available diameter of the stud and thus the size of the stud will not allow use of such a fastener when high clamp and ultimate (failure) loads are required.

US-A-2599207 discloses a fastener in which a pwal member is located in a housing which has a pair of U-shaped slots which control the movement of the pawl member.

According to the present invention, there is provided a fastener, for attachment in an aperture in a panel or like member, the fastener comprising an elongate housing having a head and a shank of lesser diameter than the head, the shank having a bore extending through the head to a point adjacent the other end of the shank; a pawl member having a pair of opposed locking pawls, slidably disposed within the bore in the housing, with the locking pawls extending from opposite sides of the housing shank through slots; and, a spring disposed in the housing bore between the end of the shank remote from the head and the pawl member to bias the pawl member towards the head; characterised in that: each of the locking pawls has a bevelled surface facing towards the underside of the head of the housing, the pawl member being restrained from rotating in the housing by guiding of the pawls in the slots in the housing.

By this construction, the width of the pawl member relative to the diameter of the housing can be as large as possible to enable the fastener to be used in situations requiring a high clamp load and high ultimate load. In this fastener, there is a low parts count and assembly is simple, keeping manufacturing costs to minimum. Furthermore, the housing does not need to be secured to the panel independently. This results from the bevelling of the upper surface of the pawls, which in turn allows the fastener to be attached to the panel in an aperture which has a first pair of diametrically opposed slots and, at right angles thereto, a second pair of opposed slots, the first and second slots respectively having a width greater and smaller than that of the locking pawls so that the fastener can be attached to the panel by offering up the fastener with the locking pawls aligned to the wider slots, pushing the shank of the housing into the aperture, and then rotating the fastener until the locking pawls are aligned with the narrower slots. Under the action of the spring, the locking pawls are retained, detent-like, partially in the narrower slots, to secure the fastener to the panel.

To attach the panel to the support, the support has an aperture similar to that of the panel, but orientated 90° to the aperture in the panel, whereby, after location of the fastener on the panel, the panel is presented to the support, the shank of the fastener housing passing through the aperture and the locking pawls passing through the wider slots in the support aperture, whereafter the fastener can again be rotated until the locking pawls, lying behind the support, are engaged with the narrower slots of the support aperture.

The invention includes the combination of a fastener according to the invention and a panel or like member and a support as described in the preceding paragraph.

One example of a fastener according to the invention, will now be described with reference to the accompanying drawings in which:-
Figure 1 is an exploded perspective view of the fastener;
Figure 2 is a perspective view of the assembled fastener;

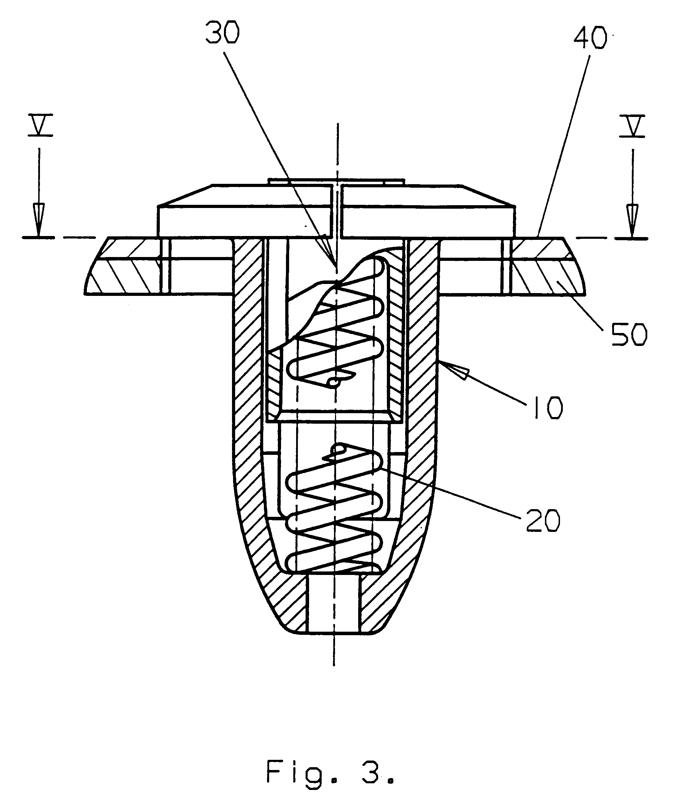

Figure 3 is a partial axial section of the fastener on a panel and support, but in the partially engaged position;

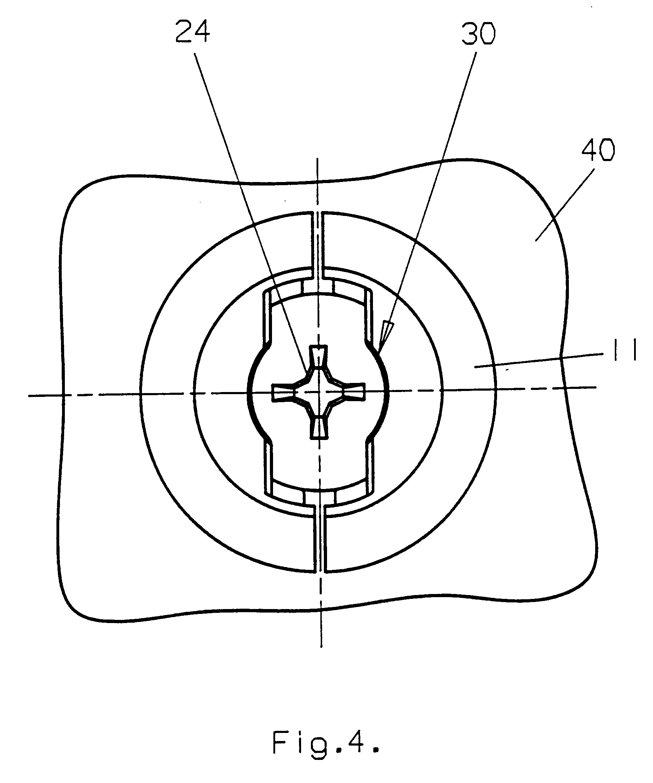

Figure 4 is a plan view on figure 3;

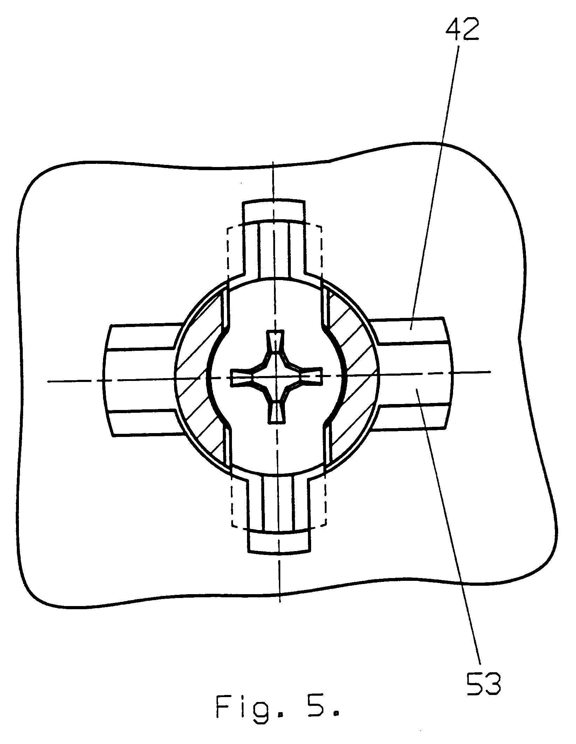

Figure 5 is a section on V-V in figure 3;

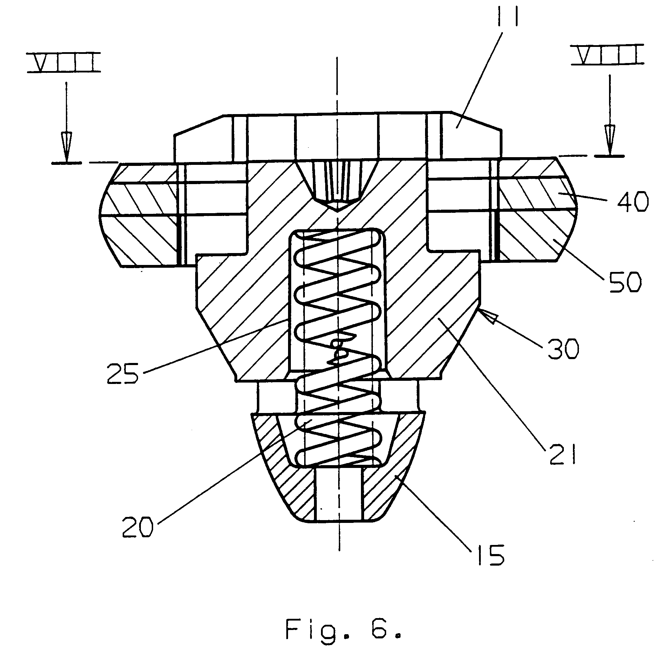

Figure 6 is a partial axial section of the fastener on a panel and support, but in the partially engaged position;

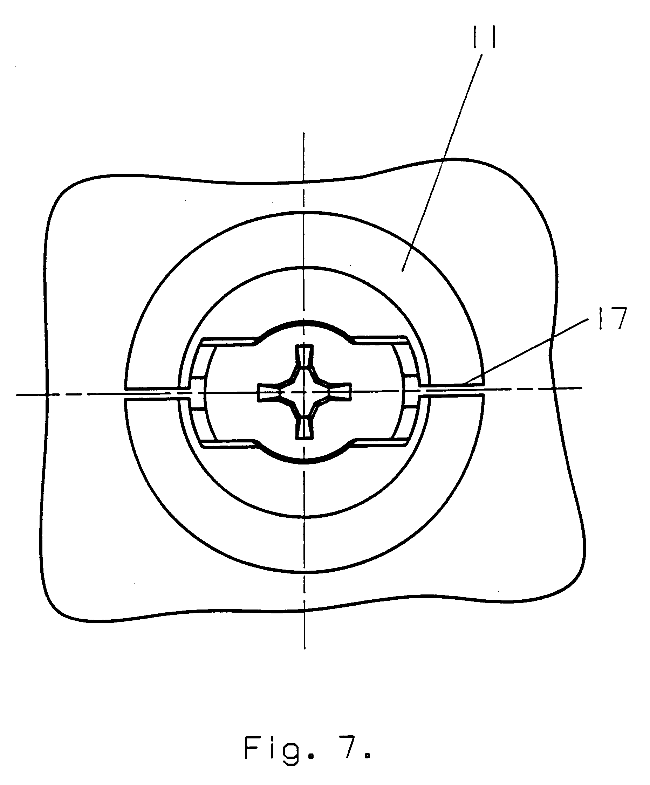

Figure 7 is a plan view on figure 6;

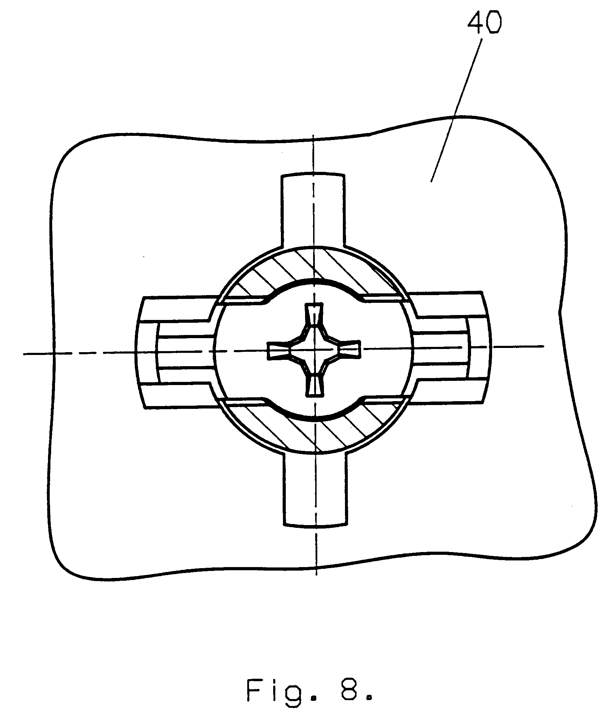

Figure 8 is a section on VIII-VIII in figure 6;
Figure 9 is a plan view showing the shape of the apertures in the panel and support; and,

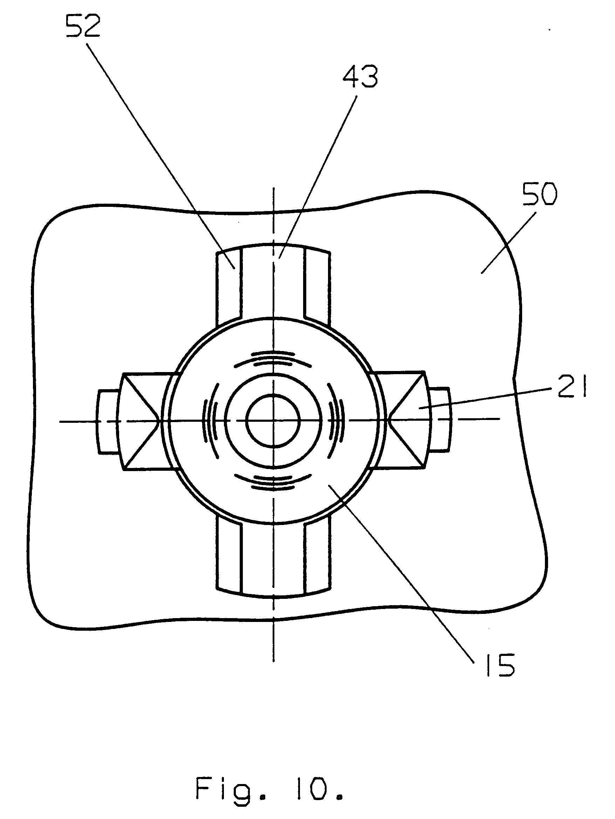

Figure 10 is an underneath plan view on figure 6.

The fastener shown in the drawings has a nylon housing 10 which includes a head 11 and a shank 12. The housing 10 has a bore 13 with elongate slots 14 in the sidewalls of the housing, the bore extending through the head towards the remote end of the shank 12, which has a bullet shaped nose 15 with an internal socket 16 to receive one end of a helical compression spring 20. The housing 10 may be glass filled. The head 11 has a pair of slits 17 which, being aligned with the slots 14, effectively split the head end of the housing into two halves to enable assembly of the fastener. The underside of the head has diametrically opposed detent pips 18, the purpose of which will be described later.

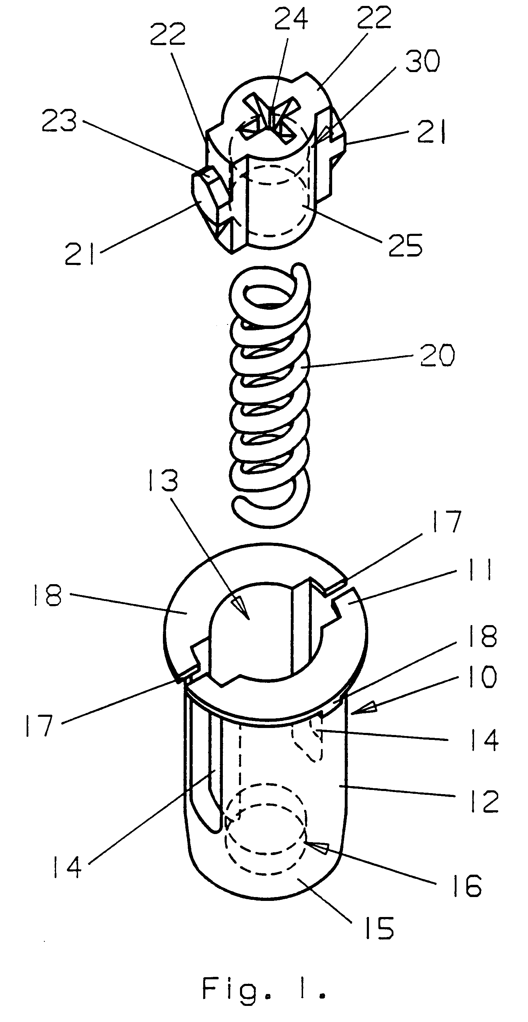

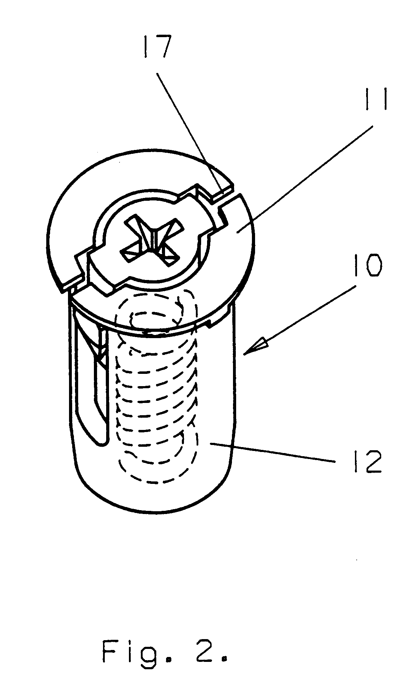

A pawl member 30, which is a zinc alloy die-casting, is a snap fit in the housing 10, being pushed into the bore 13 through the head, the slits 17 in the head 11 opening up to allow insertion of the pawl member against the biassing force of the spring 20. The pawl member 30 has a generally circular cross-section with a pair of laterally extending locking pawls 21 disposed radially outwardly of protrusions 22 which, after assembly, extend through the slots 14 in the sidewalls of the housing 10. The upper surface 23 of each of the locking pawls is bevelled on both sides and the pawls also taper sharply downwards as shown most clearly in figures 1 and 2. In the top of the pawl member is a slot 24 for receiving a screwdriver tip. The pawl member also has an internal bore 25 to receive the top end of the compression spring 20.

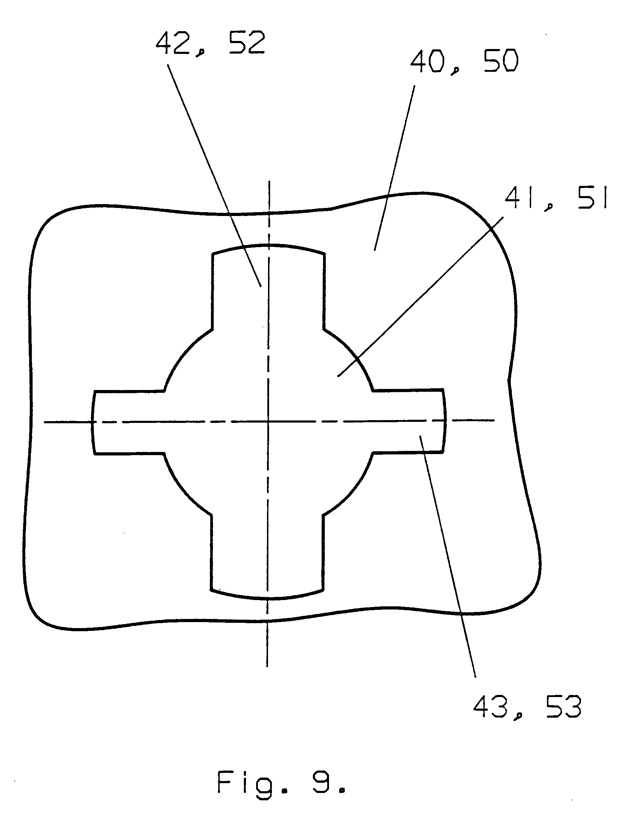

To use the fastener to attach a panel 40 and a support 50 which have apertures 41,51 as shown in figure 9, but orientated at 90° to one another, the fastener is first attached to the panel 40 by offering up the fastener with the locking pawls 21 aligned to the wider slots 42 in the panel, pushing the shank 12 of the housing into the aperture, pushing the pawl member further into the housing against the bias of the spring 20 (if necessary because of the thickness of the panel) and then rotating the fastener, with say a screwdriver engaged with the slot 24, until the locking pawls 21 are aligned with the narrower slots 43. Under the action of the spring the locking pawls are retained, detent-like, partially in the narrower slots 43, to secure the fastener to the panel, with the pips 18 engaged with the wider slots 42.

The aperture 51 of the support is similar to that of the panel, but orientated 90° to the aperture in the panel, so that, after location of the fastener on the panel 40, the panel can be presented to the support 50, the shank of the housing 10 passing through the aperture 51 and the locking pawls passing through the wider slots 52 in the support aperture, whereafter the fastener can again be rotated until the locking pawls, lying behind the support, are engaged with the narrower slots 53 of the support aperture, the detent action provided by the spring 20 and the bevelling of the upper surface of the locking pawls holding the fastener in the secured or locked position. This is aided by the pips 18, which locate in the narrower slots 43 of the aperture 41 in the panel 40 in the latched position.

The free length and characteristics of the spring may be chosen to suit different panel/support requirements as may be the length of the pawl member in order to provide a "pop-up" feature, the pawl member length determining whether the pawl is flush with the head before or after latching, or perhaps standing proud before latching and recessed after latching.

Whilst the housing 10 has been described as being made of nylon into which is snap fitted the pawl member 30, a steel housing may be used which is closed to retain the stud and spring after assembly.

## Claims

1. A fastener, for attachment in an aperture in a panel or like member, the fastener comprising an elongate housing (10) having a head (11) and a shank (12) of lesser diameter than the head (11), the shank (12) having a bore (13) extending through the head (11) to a point adjacent the other end of the shank (12); a pawl member (30) having a pair of opposed locking pawls (21), slidably disposed within the bore (13) in the housing (10), with the locking pawls (21) extending from opposite sides of the housing shank (12) through slots (14); and, a spring (20) disposed in the housing bore (13) between the end of the shank (12) remote from the head (11) and the pawl member (30) to bias the pawl member (30) towards the head (11); characterised in that:
each of the locking pawls (21) has a bevelled surface (23) facing towards the underside of the head (11) of the housing (10), the pawl member (30) being restrained from rotating in the housing by guiding of the pawls in the slots (14) in the housing.

2. A fastener according to claim 1, wherein the head (11) has two slits (17) aligned with the opposed slots (14) in the housing (10).

3. A fastener according to claim 1 or claim 2, wherein the underside of the head (11) has diametrically-opposed pips (18), positioned at right angles to the slots (14).

4. A fastener according to claims 1 to 3, wherein the side of each locking pawl (21) opposite the bevelled surface (23) is tapered.

5. A fastener according to any of the preceding claims 1 to 4, wherein the pawl member (30) has a slot (24) for receiving the blade of a screwdriver or the like for assisting in turning the fastener.

6. In combination, a fastener according to any of the preceding claims; a panel (40) having an aperture (41) which has a first pair of diametrically opposed slots (42) and, at right angles thereto, a second pair of opposed slots (43), the first (42) and second (43) slots respectively having a width greater and smaller than that of the locking pawls (21); a support (50) having an aperture (51) which has a first pair of diametrically opposed slots (52) and, at right angles thereto, a second pair of opposed slots (53), the first (52) and second (53) slots respectively having a width greater and smaller than that of the locking pawls (21); the panel aperture (41) and support aperture (51) being oriented after assembly with the wider slots (42) of the panel (40) lying behind the narrower slots (53) of the support (50), and vice versa, the locking pawls (21) passing on assembly through the respective wider slots (42,52) in the panel (40) and support (50), the fastener being rotated as required to locate the locking pawls (21) in the narrower slots (53) of the support (50).

7. A combination according to claim 6, wherein the characteristics of the spring (20) and the length of the pawl member (30) are such that the pawl member stands proud of the panel (40) when the fastener is fixed to the panel (40) only, and is substantially flush with or beneath the outer surface of the panel (40) when the fastener is fixed to the panel (40) and the support (50).

## Patentansprüche

1. Befestigungsvorrichtung zur Befestigung in einer Öffnung einer Platte oder eines ähnlichen Bauteils, wobei die Befestigungsvorrichtung ein langgestrecktes Gehäuse (10) mit einem Kopf (11) und einem Schaft (12), der einen kleineren Durchmesser als der Kopf (11) besitzt und eine Bohrung (13) aufweist, die sich durch den Kopf (11) bis zu einem dem anderen Ende des Schafts (12) benachbarten Punkt erstreckt; ein Sperrklinkenbauteil (30) mit einem Paar entgegengesetzt gerichteter Arretierungssperrklinken (21), die in der Bohrung (13) des Gehäuses (10) verschiebbar angeordnet sind und sich von entgegengesetzt gerichteten Seiten des Gehäuseschafts (12) durch Schlitze (14) hindurch erstrecken; sowie eine Feder (20) umfaßt, die in der Gehäusebohrung (13) zwischen dem dem Kopf (11) abgewandten Ende des Schafts (12) und dem Sperrklinkenbauteil (30) angeordnet ist, um dem Sperrklinkenbauteil (30) eine Vorspannung in Richtung des Kopfes (11) zu erteilen; und wobei die Befestigungsvorrichtung dadurch gekennzeichnet ist, daß:
jede der Arretierungssperrklinken (21) eine der Unterseite des Kopfes (11) des Gehäuses (10) zugewandte abgeschrägte Fläche (23) aufweist, und das Sperrklinkenbauteil (30) durch die Führung der Sperrklinken in den Schlitzen (14) des Gehäuses von einer Drehung in dem Gehäuse abgehalten wird.

2. Befestigungsvorrichtung nach Anspruch 1, bei der der Kopf (11) zwei Schlitze (17) aufweist, die mit den entgegengesetzt gerichteten Schlitzen (14) im Gehäuse (10) ausgerichtet sind.

3. Befestigungsvorrichtung nach Anspruch 1 oder Anspruch 2, bei der die Unterseite des Kopfes (11) diametral entgegengesetzt gerichtete Höcker (18) besitzt, die in rechten Winkeln zu den Schlitzen (14) angeordnet sind.

4. Befestigungsvorrichtung nach einem der Ansprüche 1 bis 3, bei der die Seite einer jeden Arretierungssperrklinke (21), die der abgeschrägten Fläche (23) entgegengesetzt gerichtet ist, spitz zuläuft.

5. Befestigungsvorrichtung nach einem der vorhergehenden Ansprüche 1 bis 4, bei der das Sperrklinkenbauteil (30) einen Schlitz (24) zur Aufnahme der Klinge eines Schraubendrehers oder dergleichen aufweist, um ein Drehen der Befestigungsvorrichtung zu unterstützen.

6. Kombination einer Befestigungsvorrichtung nach einem der vorhergehenden Ansprüche; einer Platte (40) mit einer Öffnung (41), die ein erstes Paar diametral entgegengesetzt gerichteter Schlitze (42) sowie in rechten Winkeln dazu ein zweites Paar entgegengesetzt gerichteter Schlitze (43) aufweist, wobei die ersten (42) und zweiten (43) Schlitze jeweils eine größere bzw. kleinere Breite als die Arretierungssperrklinken (21) besitzen; und eines Unterstützungsteils (50) mit einer Öffnung (51), die ein erstes Paar diametral entgegengesetzt gerichteter Schlitze (52) sowie in rechten Winkeln dazu ein zweites Paar entgegengesetzt gerichteter Schlitze (53) aufweist, wobei die ersten (52) und zweiten (53) Schlitze jeweils eine größere bzw. kleinere Breite als die Arretierungssperrklinken (21) besitzen; und wobei die Plattenöffnung (41) und die Unterstützungsteilöffnung (51) nach dem Zusammenbau so ausgerichtet sind, daß die breiteren Schlitze (42) der Platte (40) hinter den schmaleren Schlitzen (53) des Unterstützungsteils (50) liegen und umgekehrt, und wobei die Arretierungssperrklinken (21) während des Zusammenbaus durch die jeweiligen breiteren Schlitze (42, 52) in der Platte (40) und im Unterstützungsteil (50) hindurchgehen, wobei die Befestigungsvorrichtung wie erforderlich gedreht wird, um die Arretierungssperrklinken (21) in den schmaleren Schlitzen (53) des Unterstutzungsteils (50) aufzunehmen.

7. Kombination nach Anspruch 6, bei der die charakteristischen Merkmale der Feder (20) und die Länge des Sperrklinkenhauteils (30) so bemessen sind, daß das Sperrklinkenbauteil aus der Platte (40) herausragt, wenn die Befestigungsvorrichtung lediglich an der Platte (40) befestigt ist, und sich im wesentlichen in gleicher Ebene mit oder unterhalb der äußeren Oberfläche der Platte (40) befindet, wenn die Befestigungsvorrichtung an der Platte (40) und am Unterstützungsteil (50) befestigt ist.

## Revendications

1. Attache destinée à être fixée dans une ouverture d'un panneau ou élément analogue, l'attache comprenant un boîtier allongé (10) comportant une tête (11) et un corps (12) de moindre diamètre que la tête (11), le corps (12) comportant un perçage (13) qui s'étend à travers la tête (11) jusqu'à un point adjacent à l'autre extrémité du corps (12), un élément formant taquet (30) comportant une paire de taquets d'arrêt (21) opposés, disposé à coulissement dans le perçage (13) du boîtier (10), les taquets d'arrêt (21) s'étendant dans des fentes (14) depuis les côtés opposés du corps (12) du boîtier, et un ressort (20) disposé dans le perçage (13) du boîtier entre l'extrémité du corps (12) distante de la tête (11) et l'élément formant taquet (30) pour solliciter l'élément formant taquet (30) en direction de la tête (11), caractérisé en ce que :
chacun des taquets d'arrêt (21) a une surface biseautée (23) tournée vers le côté inférieur de la tête (11) du boîtier (10), l'élément formant taquet (30) étant empêché de tourner dans le boîtier par guidage des taquets dans les fentes (14) du boîtier.

2. Attache selon la revendication 1, dans laquelle la tête (11) comporte deux fentes (17) alignées avec les fentes opposées (14) du boîtier (10).

3. Attache selon la revendication 1 ou la revendication 2, dans laquelle le côté inférieur de la tête (11) comporte des ergots (18) diamétralement opposés, positionnés à angle droit par rapport aux fentes (14).

4. Attache selon les revendications 1 à 3, dans laquelle le côté de chaque taquet d'arrêt (21) opposé à la surface biseautée (23) est aminci.

5. Attache selon l'une quelconque des revendications précédentes 1 à 4, dans laquelle l'élément formant taquet (30) a une fente (24) pour recevoir la lame d'un tournevis ou analogue pour favoriser la rotation de l'attache.

6. Combinaison constituée par une attache selon l'une quelconque des revendications précédentes, un panneau (40) comportant une ouverture (41) qui a une première paire de fentes diamétralement opposées (42) et, à angle droit par rapport à celle-ci, une seconde paire de fentes opposées (43), les premières (42) et secondes (43) fentes ayant une largeur respectivement plus grande et plus petite que celle des taquets d'arrêt (21), un support (50) ayant une ouverture (51) qui a une première paire de fentes diamétralement opposées (52) et, à angle droit par rapport à celle-ci, une seconde paire de fentes opposées (53), les premières (52) et secondes (53) fentes ayant une largeur respectivement plus grande et plus petite que celle des taquets d'arrêt (21), l'ouverture (41) du panneau et l'ouverture (51) du support étant orientées après l'assemblage de manière que les fentes plus larges (42) du panneau (40) soient situées derrière les fentes plus étroites (53) du support (50), et inversement, les taquets d'arrêt (21) passant en cours d'assemblage dans les fentes plus larges respectives (42, 52) du panneau (40) et du support (50), l'attache étant amenée à tourner comme cela est nécessaire pour positionner les taquets d'arrêt (21) dans les fentes plus étroites (53) du support (50).

7. Combinaison selon la revendication 6, dans laquelle les caractéristiques du ressort (20) et la longueur de l'élément formant taquet (30) sont telles que l'élément formant taquet fait saillie du panneau (40) lorsque l'attache est fixée au panneau (40) seulement, et est sensiblement de niveau avec la surface externe du panneau (40) ou est sous celle-ci lorsque l'attache est fixée au panneau (40) et au support (50).
